# EUROPEAN PATENT SPECIFICATION

(11) **EP 0 296 405 B1**
(45) Date of publication and mention of the grant of the patent: **30.03.1994**
(21) Application number: 88109098.9
(22) Date of filing: 08.06.1988
(51) Int. Cl.: G01S 17/87, G05D 1/02

(54) **A method and a device for laser-optical navigation**
Verfahren und Vorrichtung für laser-optische Navigation
Méthode et dispositif de navigation à laser optique

(30) Priority: 22.06.1987 SE 8702569
(43) Date of publication of application: 28.12.1988
(73) Proprietor: ARNEX HANDELSBOLAG, S-412 63 Göteborg (SE)
(72) Inventor: Olsén, Bengt Olof, S-461 95 Trollhättan (SE)
(74) Representative: Ferkinghoff, Claes-Göran

(56) References cited:
- EP-A- 0 213 939
- DE-A- 3 316 600
- FR-A- 2 186 658
- GB-A- 2 143 395
- US-A- 4 225 226
- US-A- 4 516 264

## Description

The subject invention concerns a method for laser-optical navigation and a device for performing the method.

To determine with high accuracy the position of a vehicle, or an implement in a field is sometimes needed in order to rationally control an operation and to obtain the highest possible effectiveness and quality from the work performed, this work being e.g. civil engineering, mining operations, or some specific farming operations like sowing.

For position determination, a number of different systems, often called navigation systems, have been developed, all having the purpose to continuously estimate the position of a moving object, such as a vehicle. Several of these systems are based on radio position finding technology and they are best suited for navigation operations that cover large open areas or when the distances between the transmitter and the receiver units are large or comparatively large. In order to obtain such long distances despite curving earth surface and other major line of sight obstacles long radio wavelengths have been traditionally employed. Due to the "crowdedness of the ether medium", at these wavelengths only limited radio frequency bandwidths are available for radio navigation, which in its turn makes it difficult to achieve average position errors better than an order of magnitude of one hundred meters. For this reason such navigation systems are mainly used onboard ships at sea or in aeroplanes.

For position finding on the earth's surface and in terrain, there are still with higher radio frequency bandwidths further precision diluting factors inherent to the radio propagation of microwaves, such as line of sight limitations due to building etc. and due to interference and reflection from obstacles on the earth that makes it difficult to achieve better accuracies than a few meters.

The purpose of the present invention is to provide, within a limited area such as a terrain field, with a laser optical system and using a number of fixed reflectors, accurate and reliable position determination in three dimensions X, Y and Z and in addition to determine the three attitude angles heading, pitch and roll.

In a prior art system, US-A-4,225,226 for laser guidance of an aircraft over a field, a fan shaped laser beam is scanning 360 degrees and the X and Y coordinates of the vehicle carrying the laser are determined from the rotation angles of the scanning mechanism as measured at each detected reflector passage. Due to the fan shaped beam, reflectors can be detected even if the vehicle should experience limited tilt angles caused by e.g. a sloping path or oscillatory motions.

In a second prior art system, GB-A-2 143 395, also a laser beam is scanning 360 degrees and the X and Y coordinates and in addition, the heading angle, these three variables completely defined in the horizontal plane, are determined employing the measurements of the rotation angle of the sensor on board the vehicle at reflector passages.

In a third prior art system, FR-A-2 186 658, one, two or several rotation laser sensors around vertical axes and one, two or several reflector arrays can be combined in a number of ways, each configuration providing for determining a vehicle's X and Y coordinates in a horizontal plane, some configurations also allowing for determining the X/Y-plane heading angle of the vehicle as represented by the angle between one principal axis fixed to the vehicle's frame and one axis of the coordinate system used for determining the position of the fixed elements of the configuration.

The above described prior art systems for position and attitude determination by means of detecting the light returned from a number of reflectors are all in principle limited in measuring only the angles around one single axis thus restricting the ensuing determination of position to a two dimensional pair of coordinates in a single plane and among the vehicle's principal three attitude angles at most to determination of only the heading angle of the vehicle, this heading angle being defined e.g. as the angle between one principal axis of the vehicle projected upon a plane and one earth referenced axis within that single plane.

If the vehicle is tilting and the tilt angle is not known or compensated for, the error of the position estimate in the two dimensions will increase with the amount of tilt. Consequently, prior art systems such as the ones mentioned above, are subjected to position errors in terrain due to tilt angles different from zero. Also, these systems cannot determine the height or Z-coordinate of the vehicle.

The present invention concerns a method of laser-optical navigation of moving vehicles by determination of the position coordinates X, Y and Z and the attitude angles of heading, pitch and roll of a vehicle-based coordinate system in actual time relatively to a ground-based coordinate system, on the basis of the recording of reflected light with the aid of an active laser-optical sensor unit mounted on the vehicle and arranged to emit a rotating beam of laser light and by receiving the recorded light as reflections of said beam of light from reflectors which are positioned at different distances from the vehicle and at the coordinates X(i), Y(i), Z(i) i = = 1, 2, 3 .....which are known in said ground-based coordinate system, the laser beam being emitted in the form of a narrow vertical fan-shaped pulsed beam rotating around the vertical axis of the vehicle-based coordinate system.

The laser-optical navigation method in accordance with the present invention which is defined in claim 1 is characterized therein that the light reflected by the reflectors is detected by a series of photo diodes incorporated in the sensor unit, the light registered by the sensor unit being used for elevation as well as lateral angle measurements of the locations of the reflectors in the vehicle-based coordinate system and said angle measurements being data processed to determine the positional coordinates and the attitude angles of the vehicle-based coordinate system in the ground-based coordinate system.

The device as defined in claim 2 for performing the laser-optical navigation method according to the present invention is characterized in that the sensor unit comprises means, such as a camera lens, for receiving incoming reflected rays and, positioned thereafter, a linear photo diode array which is operative in the illuminated spatial angle for detecting purposes to perform elevation angle measurements simultaneously with said above-mentioned lateral angle measurements in relation to the reflector which is illuminated at a defined moment.

The sensor unit is rigidly mounted on top of the vehicle and it rotates around the Z-axis of a coordinate system fixed to the sensor. The emitted disc of light is thus rotating around this Z-axis of the local coordinate system so that the Z-axis itself always is contained in the rotating plane of the disc.

The reflectors are placed at different positions in the field, each reflector's coordinates X(i), Y(i), Z(i), i = 1, 2, 3 .... in the coordinate system fixed to earth assumed to be known on beforehand.

When detecting the reflected light at the moment of a reflector passage, when the sensor is rotating, the electro-optic receiver in the sensor unit, in combination with the image and digital signal processing computers in the same unit, employs means for measuring the horizontal as well as the vertical angle, in the coordinate system fixed to the vehicle, to the reflector. Thus each reflector passage yields two measurements: the horizontal and the vertical angle that are used subsequently in the position determination computer.

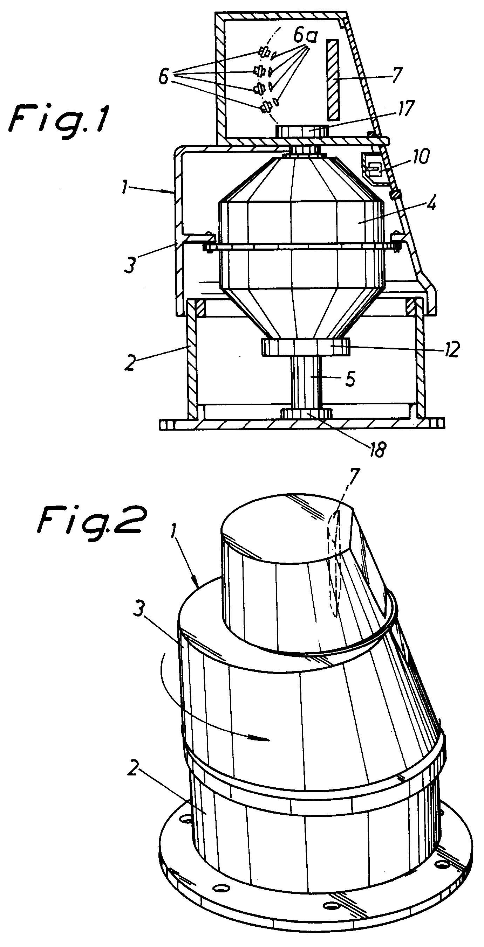

The invention will be described in closer detail in the folowing with reference to the accompanying drawings, wherein
Fig. 1 is a vertical sectional view through the device in accordance with the invention,
Fig. 2 is a perspective view of the device,
Fig. 3 is a schematic view of the structure of the electronic means of the device,
Fig 4 is a perspective view of one example of a vehicle equipped with the device in accordance with the invention, and
Fig. 5 is a plan view of a field adjoining a farm and a vehicle equipped with the device, standing in the middle of the field.

The device is enclosed in a housing 1 comprising one stationary section 2 and one rotating section 3. The rotating section 3 is connected with and it is rotated by the rotor 4 of an external rotor motor having a fixed stator 5.

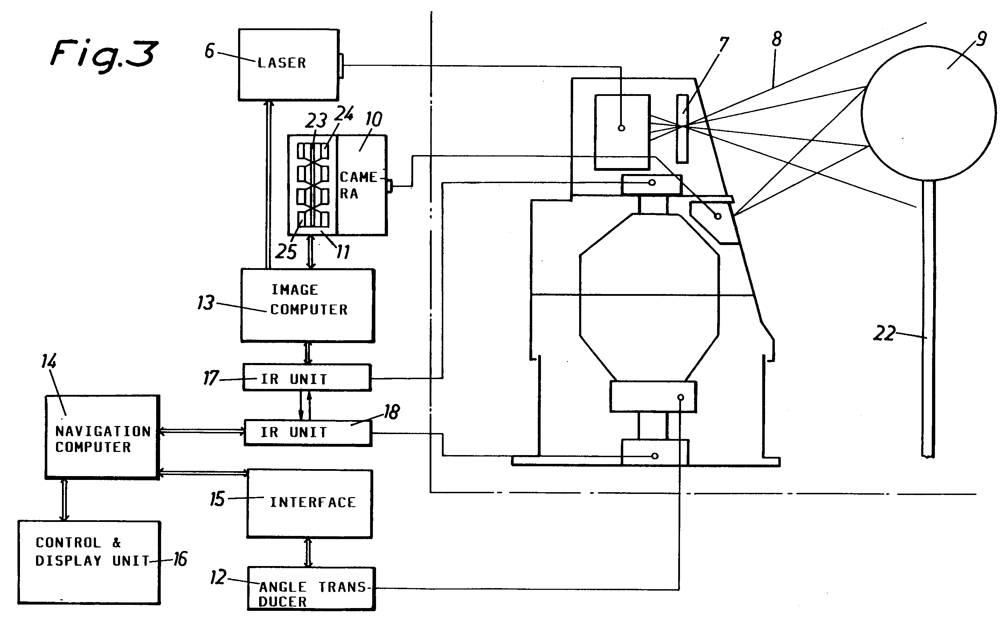

In the rotating section 3 of the housing 1 is contained a sensor unit which is part of the device. The sensor comprises a set of laser diodes 6 which together with one beam focusing lens 6a are mounted in superposed positions along a curved line behind a laterally collimating lens 7 which is common to all the laser diodes. The function of the set of laser diodes 6 is to emit a pulsed beam of light 8 while rotating (see Fig. 3) which beam impinges on reflectors 9 which are set out at suitable locations and which reflect the light to a co-rotating camera 10 which is part of the sensor unit. The light pulses transmitted to the camera are received by a linear photo diode array 11 which measures the elevation angle relative to the reflector and which will be described in closer detail in the following.

The device also comprises an angle transducer 12 consisting of a coded disc which indicates the momentary angular position of the rotating sensor unit.

The measurement equipment likewise comprises a first computer 13, called image computer, serving to process input information rapidly, and a second, larger navigation computer 14 containing complete information on the coordinates (X)i, Y(i) and Z(i) of each reflector number i = 1, 2, 3 .... in the coordinate system fixed to ground. This computer performs all the calculations necessary in order to determine the coordinates X, Y and Z of the sensor in the coordinate system fixed to ground, as well as calculations of the heading, pitch and roll angles of the sensor as defined by the orientation of the coordinate system fixed to the sensor with respect to the coordinate system fixed to ground and is able to correct the movements of the vehicle. An interface 15 is connected to the navigation computer 14 to serve as an identification unit between the angle transducer 12 and this computer, and also a control and display unit 16, the latter showing the position of the vehicle and supplying the control and guidance information obtained from the computer 14.

The signal transmission in either direction is effected by means of a bidirectional IR link between two units 17 and 18.

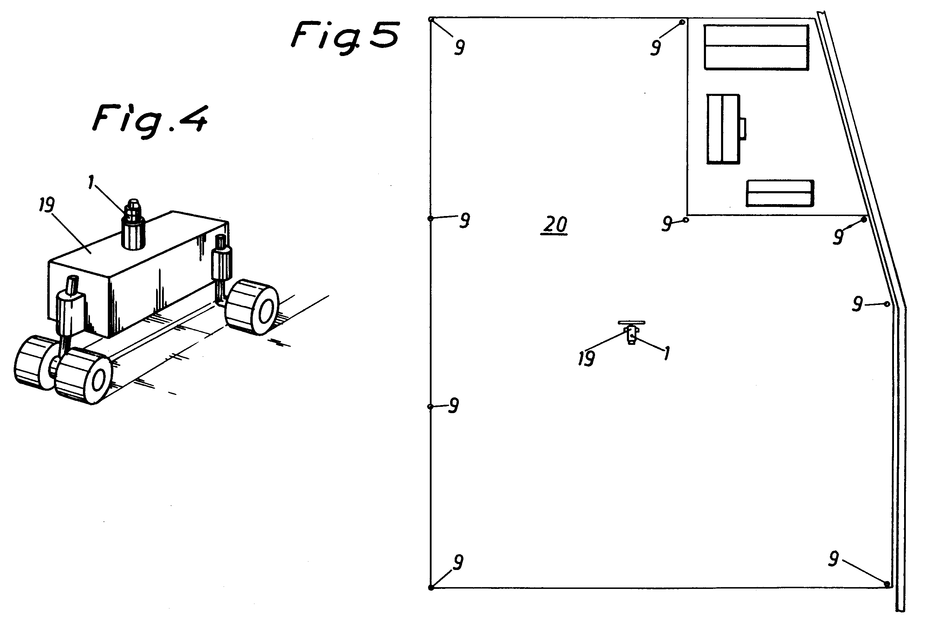

Fig. 4 shows one example of a vehicle 19 of a special design which is equipped with the device in accordance with the invention. The vehicle is intended to be driven across a field while being remote controlled and it is equipped with implements such a plough or a harrow.

Fig. 5 is a situation plan of a field 20 and a farm 21. The utility vehicle 19 is positioned in the middle of the field. Around the field 20 and along its borders a number of reflectors 9 are mounted on pillars 22 (see Fig. 3). Preferably, the reflectors are spherical, having a diameter of approximately one meter.

To set up the navigation systems a couple of reflectors 9 are initially put in positions in locations, the coordinates of which are known and may be read from e.g. a survey map, such as some of the corners of the field 20. The coordinates are stored in the memory of the navigation computer 14. An arbitrary number of reflectors 9 are then set out as illustrated in Fig. 5. The vehicle 19 is then driven into the field 20 and is allowed to stand immobile briefly while the system is started up. During the rotation of the sensor unit the row of laser diodes 6 emits a pulsed beam of light 8 in the form of a rotating vertical disc. The beam of light is reflected by the reflectors 9 and is received by the co-rotating camera 10 and transmitted further to the linear photo array 11. The latter consists of a chain of photo diodes 23 arranged along a vertical line and equipped with memory circuits 24, 25 on either side. When the light pulses reach the individual photo diodes 22 in the chain of diodes, charges are transferred to the memory circuits 24, 25, the latter then emitting electrical pulse signals to the image computer 13. In the latter the input information is rapidly processed to determine the elevation angle, the pulse amplitude being sensed for comparison with a threshold value which is stored in the computer to ensure that any erroneous reflecting light pulses emitted by other objects than the reflectors 9 are eliminated.

Via the IR units 17, 18 the read-out message from the image computer 13 is transmitted to the larger navigation computer 14, the latter processing the received values resulting from the vertical angle and the horizontal angle as measured in the coordinate system fixed to the sensor. In this manner the navigation computer 14 makes use of the already stored coordinates X(i), Y(i), Z(i), of the reflectors number i = 1, 2, 3 ....., in the coordinate system fixed to ground, and calculates the position coordinates X, Y and Z of the sensor in the coordinate system fixed to ground, and in addition, also its heading, pitch and roll angles as defined by the orientation of the coordinate system fixed to the sensor with respect to the coordinate system fixed to ground.

The rotational speed of the sensor unit is comparatively high, approximately 10 revolutions per second. This provides updated information on the horizontal and vertical angles, as defined in the coordinate system fixed to the vehicle, to each visible reflector. When the vehicle movements are normal the updating speed is so high that the position of the vehicle at any given moment is most accurately determined on the basis of a number of retrospective measurements which are used to calculate the instant position and attitude.

This possibility is made use of by the device which also comprises a Kalman filter to calculate instant and predicted positions and attitudes based not only on the latest measurements but also on a number of past measurements.

This predicting filter also makes it possible to increase the navigation reliability considerably for the reason that the available laser energy and the computer capacity may be concentrated to a smaller survey or scanning area for each new reflector passage. As a result, false signals such as from highly reflecting points in nature or from sources of very high intensity light are largely eliminated.

The vehicle 19 illustrated in the drawings is intended to be an unmanned vehicle, in which case a terminal which is connected to the navigation device is part of a remote control unit, with the aid of which the vehicle operator may receive and transmit the information for control and guidance. The terminal could also be positioned in the driver's cabin of a vehicle such as a tractor, in which the driver from a monitor receives the information that is necessary to make the required corrective vehicle movements.

The device in accordance with the invention provides an excellent and comparatively uncomplicated navigation system with intended use within a relatively limited area. The reflectors 9 are simple and may be installed rapidly by the individual user. Despite its relative simplicity the navigation system allows the position to be determined with an accuracy of about 0.1 m and it is free of negative effects, such as cross-interference between a number of vehicles or other neighbouring systems. The device is very useful in terrains of various nature, e.g. for the purpose of soil cultivation on agricultural fields or for the purpose of extracting peat from bogs and in forestry operations.

## Claims

1. A method of laser-optical navigation of moving vehicles by determination of the position coordinates X, Y and Z and the attitude angles of heading, pitch and roll of a vehicle-based coordinate system in actual time relatively to a ground-based coordinate system, on the basis of the recording of reflected light with the aid of an active laser-optical sensor unit (6, 10, 11) mounted on the vehicle (19) and arranged to emit a rotating beam of laser light (8) and by receiving the recorded light as reflections of said beam of light (8) from reflectors (9) which are positioned at different distances from the vehicle (19) and at the coordinates X(i), Y(i), Z(i) i = 1, 2, 3 ....which are known in said ground-based coordinate system, the laser beam being emitted in the form of a narrow vertical fan-shaped pulsed beam rotating around the vertical axis of the vehicle-based coordinate system, **characterized** in that the light reflected by the reflectors (9) is detected by a series of photo diodes (23) incorporated in the sensor unit (6, 10, 11), the light registered by the sensor unit (6, 10, 11) being used for elevation as well as lateral angle measurements of the locations of the reflectors (9) in the vehicle-based coordinate system and said angle measurements being data processed to determine the positional coordinates and the attitude angles of the vehicle-based coordinate system in the ground-based coordinate system.

2. A device for laser-optical navigation in accordance with the method of claim 1, said device comprising a rotating sensor unit (6, 10, 11) having means (4, 6, 6a, 7) designed to emit a beam of light (8) in the form of a vertical fan-shaped pulsed beam, reflectors (9) placed at a larger and/or smaller distance from the sensor unit (6, 10, 11) to reflect light to the sensor unit (6, 10, 11), an angle transducer (12) for performing lateral angle measurements in relation to the reflectors (9) and on the one hand a first computer (13) for performing image analysis and a second computer (14) for processing data received from the first computer (13) regarding the lateral and elevation angle positions of the reflectors (9) in the vehicle-based coordinte system, **characterized** in that the sensor unit comprises means, such as a camera lens (10), for receiving incoming reflected rays and, positioned thereafter, a linear photo diode array (11) which is operative in the illuminated spatial angle for detecting purposes to perform elevation angle measurements simultaneously with said above-mentioned lateral angle measurements in relation to the reflector (9) which is illuminated at a defined moment.

## Patentansprüche

1. Verfahren zur optischen Navigation mittels Laser von bewegten Fahrzeugen durch Bestimmung der Positionskoordinaten X,Y,Z und der Lagewinkel hinsichtlich Steuerkurs, Inklination und Schlingerbewegung in einem Fahrzeug-Bezugssystem in Echtzeit relativ zu einem Boden-Bezugssystem auf der Grundlage der Registrierung von reflektiertem Licht mittels einer auf dem Fahrzeug (19) befestigten aktiven laser-optischen Sensoreinheit (6,10,11), die derart angeordnet ist, daß sie einen rotierenden Laserstrahl (8) emittiert, und durch Empfang des übertragenden Lichts als Reflexionen des Laserstrahls (8) von Reflektoren (9), die in unterschiedlichen Abständen zum Fahrzeug (19) und mit im Boden-Bezugssystem bekannten Koordinaten X(i), Y(i), Z(i) (i=1,2,3...) angeordnet sind, wobei der Laserstrahl in Form eines schmalen vertikalen, fächerartigen Pulsstrahls emittiert wird, der sich um die vertikale Achse des Fahrzeug-Bezugssystems dreht, dadurch gekennzeichnet, daß das durch die Reflektoren (9) reflektierte Licht durch eine Reihe von innerhalb der Sensoreinheit (6,10,11) befindlichen Photodioden (23 detektiert wird, daß das durch die Sensoreinheit (9,10,11) empfangene Licht sowohl zum Messen des Höhen- als auch des Horizontalwinkels der Standorte der Reflektoren (9) im Fahrzeug-Bezugssystem verwendet wird und daß mittels Winkelmessungen die Standortkoordinaten und -winkel des Fahrzeug-Bezugssystem im Boden-Bezugssystem rechnerisch bestimmt werden.

2. Vorrichtung zur optischen Navigation mittels Laser mittels des Verfahrens nach Anspruch 1, wobei die Vorrichtung eine rotierende Sensoreinheit (6,10,11) mit Elementen (4,6,6a,7) zum Emittieren eines Laserstrahls (8) in Form eines vertikalen fächerartigen Pulsstrahls, in größerem und/oder kleinerem Abstand zur Sensoreinheit (6,10,11) angeordnete Reflektoren (9) zur Reflexion des Lichts in Richtung der Sensoreinheit (6,10,11), einen Winkelumformer (12) zur Durchführung der Horizontalwinkelmessungen bezüglich der Reflektoren (9) und einen ersten Computer (13) zur Durchführung einer Abbildungsanalyse und einen zweiten Computer (14) zur Datenverarbeitung der vom ersten Computer (13) bezüglich Horizontal- und Höhenwinkelpositionen der Reflektoren (9) im Fahrzeug-Bezugssystem erhaltenen Daten aufweist, dadurch gekennzeichnet, daß die Sensoreinheit Einrichtungen, wie eine Kameralinse (19), zum Empfang der einfallenden Strahlen aufweist, und ein dahinter angeordnetes lineares Photodioden-Array (11) aufweist, welches im beleuchteten Raumwinkel zur gleichzeitigen Durchführung von Höhen- wie auch Horizontalwinkelmessungen bezüglich des zu einem bestimmten Zeitpunkt beleuchteten Reflektors (9) detektionsfähig ist.

## Revendications

1. Procédé de navigation à laser optique pour véhicule mobile, par la détermination don ses coordonnées de position X, Y et Z et de ses angles d'attitude d'azimut, de tangage et de roulis dans un système de coordonnées lié en temps réel au véhicule et se rapportant à un système de coordonnées lié au sol, basé sur un principe d'analyse de la lumière réfléchie, à l'aide d'une sonde active à laser optique (6, 10, 11) montée sur le véhicule (19) et conçue pour émettre un faisceau tournant de lumière laser (8), la lumière reçue et enregistrée provenant de la réflexion dudit faisceau de lumière (8) sur des réflecteurs (9) placés à des distances variables du véhicule (19) en des points de coordonnées X(i), Y(i), Z(i) (i = 1, 2, 3 ...) connues dans ledit système de coordonnées lié au sol, le rayon laser étant émis sous la forme de pulsations lumineuses en forme de frange verticale étroite tournant autour de l'axe vertical du système de corordonnées lié au véhicule, caractérisé en ce que la lumière réfléchie par les réflecteurs (9) est détectée par une série de diodes photo-sensibles (23) incorporée à la sonde (6, 10, 11), la lumière reçue par la sonde (6, 10, 11) étant utilisée pour les mesures de l'élévation et de l'angle latéral des positions des réflecteurs (9) dans le système de coordonnées lié au véhicule, lesdites mesures d'angle étant utilisées pour calculer les coordonnées de position et les angles d'attitude du système de coordonnées lié au véhicule dans le système de coordonnées lié au sol.

2. Dispositif de navigation à laser optique pour la mise en oeuvre du procédé de la revendication 1, comprenant une sonde rotative (6, 10, 11) avec des moyens (4, 6, 6a, 7) conçus pour émettre un rayon de lumière (8) sous la forme de pulsations lumineuses en forme de frange verticale étroite, des réflecteurs (9) placés à des distances plus ou moins importantes de la sonde (6, 10, 11) pour réfléchir la lumière provenant de la sonde (6, 10, 11), un calculateur d'angle (12) pour effectuer les mesures de l'angle de position latérale en relation avec les réflecteurs (9), et un premier ordinateur (13) pour effectuer les analyses d'image, ainsi qu'un deuxième ordinateur (14) pour traiter les informations provenant du premier ordinateur (13) du point de vue des angles de position latérale et d'élévation des réflecteurs (9) dans le système de coordonnées lié au véhicule, caractérisé en ce que la sonde comprend des moyens tels qu'un objectif optique (10) pour recevoir les rayons réfléchis entrant et, placé derrière, un réseau linéaire de diodes photo-sensibles (11) comme moyen de détection, opérationnel dans l'angle spatial éclairé, pour effectuer les mesures de l'angle d'élévation simultanément aux dites mesures de l'angle de position latérale en relation avec le réflecteur (9) éclairé à un instant donné.
